# EUROPÄISCHE PATENTSCHRIFT

(11) **EP 0 675 682 B1**
(45) Veröffentlichungstag und Bekanntmachung des Hinweises auf die Patenterteilung: **31.01.2001**
(21) Anmeldenummer: 94930973.6
(22) Anmeldetag: 24.10.1994
(51) Int. Cl.: A23B 7/16

(54) **VERFAHREN UND VORRICHTUNG ZUR BEHANDLUNG VON FRISCHFLEISCH**
METHOD OF PROCESSING FRESH MEAT
PROCEDE DE TRAITEMENT DE VIANDES FRAICHES

(30) Priorität: 22.10.1993 DE 4336138
(43) Veröffentlichungstag der Anmeldung: 11.10.1995
(60) Teilanmeldung: 00104089.8
(73) Patentinhaber: Vivotec New Concepts in Fresh Meat GmbH, 47652 Weeze (DE)
(72) Erfinder: Verhaag, Hubert, 79379 Müllheim (DE); Schwörer, Winfried, 67390 Artolsheim (FR); Schlegel, Jürgen, 7801 Umkirch (DE)
(74) Vertreter: Finsterwald, Manfred, Dipl.-Ing., Dipl.-Wirtsch.-Ing.
(86) Internationale Anmeldenummer: EP9403487
(87) Internationale Veröffentlichungsnummer: WO9510944

(56) Entgegenhaltungen:
- WO-A-92/10939
- DE-A- 4 041 070
- DE-A- 4 230 285
- US-A- 2 402 199

## Beschreibung

Die vorliegende Erfindung betrifft ein Verfahren zur Behandlung von Frischfleisch gemäß dem Oberbegriff des Anspruchs 1. Weiterhin ist die Erfindung auf eine Vorrichtung zur Durchführung dieses Verfahrens gemäß dem Oberbegriff des Anspruchs 12 gerichtet.

Ein Verfahren sowie eine Vorrichtung dieser Art sind aus der WO-A-9210939 bekannt. Bei dem in dieser Druckschrift beschriebenen Verfahren wird während der Zwischenlagerzeit wiederholt eine Sauerstoffatmosphäre mit erhöhtem Druck auf- und wieder abgebaut, wobei die Zwischenlagerzeit zwischen mehreren Tagen und mehreren Wochen betragen kann. Der maximale Druck, der nach einer jeweiligen Erhöhung zyklisch aufgebaut wird beträgt dabei zwischen 1,5 bis 2 bar über dem Atmosphärendruck. Bei der beschriebenen Vorrichtung ist eine Erhöhung der Kapazität nicht ohne weiteres möglich, da die Vorrichtung druckdicht aufgebaut sein muß.

Aus der DE/EP 0 274 334 T1 ist ein Verfahren zur Behandlung von Fleisch bekannt, das dazu dient, das Fleisch mürbe zu machen und/oder seine Haltbarkeit und sein Aussehen bei der Konservierung zu verbessern. Dazu wird das Fleisch in einen geschlossenen Behälter gelegt, in dem ein Vakuum erzeugt wird. Anschließend wird in diesen Behälter ein komprimiertes, vorzugsweise steriles Gas eingebracht, um im Behälter einen Druck zu erzeugen, der höher ist als der Atmosphärendruck. Der Behälter soll dabei während der Niederdruck-/Hochdruckzyklen vorzugsweise nach Art eines Butterfasses um sich selbst rotieren. Dieses Behandlungsverfahren ist dazu bestimmt, während der Auftauphase von Gefrierfleisch, jedoch auch vor dem Einfrieren des Fleisches sowie nach dem Gefrieren des Fleisches angewendet zu werden.

Aufgabe der vorliegenden Erfindung ist es, das eingangs angegebene Verfahren in der Weise auszubilden, daß die Zartheit des Frischfleisches im Verlauf eines Reifevorganges wesentlich erhöht, der Geschmack verbessert, die Gesamtkeimzahl entscheidend verringert und damit die Haltbarkeit wesentlich erhöht wird, und daß ein dauerhafter Frischezustand erreicht wird, der sich in einer intensiv roten Fleischfarbe äußert, die im freien Zustand des Fleisches mehrere Tage und unter Vakuum mehrere Wochen beibehalten wird.

Gelöst wird diese Aufgabe nach der Erfindung ausgehend von einem Verfahren der eingangs genannten Art durch die kennzeichnenden Merkmale des Anspruchs 1.

Dabei soll die in dem Raum geschaffene Sauerstoffatmosphäre vorteilhafterweise einen Reinheitsgrad von wenigstens 50 %, insbesondere mehr als 80 % und vorzugsweise von mindestens 93 % besitzen.

Durch die gemäß der Erfindung geschaffene hohe Sauerstoffkonzentration wird erreicht, daß sich ein äußerst ausgeprägter Reifungs- und Konservierungseffekt ergibt. Dies steht im Zusammenhang mit einer Bindung und Abführung von Kohlendioxid und Stickstoff in einer durch Diffusion aus der Sauerstoffreinatmosphäre in das Frischfleisch bewirkten deutlichen Erhöhung der Sauerstoffkonzentration im Fleisch.

Es hat sich gezeigt, daß es von Vorteil ist, den einmal in dem abgeschlossenen Raum aufgebauten Druck während der gesamten weiteren Zwischenlagerzeit zu halten. Der dauerhafte hohe Druck hat dabei offensichtlich zur Folge, daß die im Fleisch vorhandene Faserverkrampfung gelöst wird, die Fasern relativ zueinander beweglicher werden und damit das Fleisch für den angestrebten Sauerstoffeintritt zugänglicher wird. Als Folge davon ist es möglich, die Sauerstoffbeladung des Fleisches zu steigern, was praktisch eine Folge des sich einstellenden, mit einem Schwammeffekt vergleichbaren Saugeffektes ist.

Nach der Zwischenlagerzeit in der speziell geschaffenen Sauerstoffatmosphäre, die für Schweinefleisch typischerweise etwa 3 Tage und für Rindfleisch etwa eine Woche dauern kann, wird ein Frischfleisch mit einem pH-Wert erhalten, der häufig sogar etwas höher als im Beschickungszustand ist. Da der pH-Wert ein Kriterium für den Qualitätszustand des Fleisches ist, wird auch anhand dieses Kennwertes deutlich, daß mit dem erfindungsgemäßen Verfahren unerwartete Frischewerte erzielt werden können, die sich bei Fleisch in einer ausgeprägt intensiv roten Farbe äußern, die in wiederum für die Erfindung typischer Weise lange beibehalten wird.

Ein weiterer wesentlicher Vorteil des Verfahrens nach der Erfindung ist, daß der auftretende Saftverlust während des Reifens sehr gering und beispielsweise bei Rindfleisch nur etwa 1 % und bei Schweinefleisch nur etwa 2 % beträgt. Diese angegebenen Werte stellen natürlich nur Beispiele dar und sind in keiner Weise einschränkend zu verstehen.

Das überraschende Reifungsergebnis gestattet auch den Transport großer Fleischstücke ohne Verwendung von Vakuumhüllen, ohne daß sich die sonst übliche Dunkelverfärbung des Frischfleisches einstellt. Eine Haltbarkeit des Fleisches von einer Woche nach der Zwischenlagerzeit ist ohne zusätzliche Maßnahmen ohne weiteres möglich.

Dieses Verhalten des nach dem Verfahren gemäß der Erfindung gereiften Frischfleisches ermöglicht es auch, Frischfleisch in wiederverwendbaren Behältnissen, insbesondere Glasbehältnissen einzuschließen und auf diese Weise die heute üblichen Kunststoffolienverpackungen zu vermeiden und somit zu einer Verringerung der Umweltbelastung beizutragen. In dem verschließbaren Behältnis kann eine Sauerstoffatmosphäre, gegebenenfalls unter geringem Überdruck, geschaffen werden.

Vorteilhaft ist auch, daß aufgrund der nach der Sauerstoffbehandlung vorhandenen hohen Sauerstoffkonzentration im Fleisch kein oder nur ein wesentlicher Anteil an Sauerstoff aus der Umgebungsatmosphäre auf das Fleisch einwirken muß, um den Frischezustand lange aufrechtzuerhalten. Große, eine entsprechende Sauerstoffmenge fassende Behältnisse sind deshalb für die Aufbewahrung und den Transport des Fleisches nicht erforderlich.

Das erfindungsgemäße Verfahren kann besonders effektiv durchgeführt werden, wenn der Absaugvorgang während einer Zeitspanne von einer Stunde durchgeführt wird, wobei der Druck innerhalb des geschlossenen Raums bis zu einem Unterdruck von 50 bis 100 mbar abgesenkt wird, und anschließend der Aufbau der Sauerstoffatmosphäre innerhalb des geschlossenen Raums bis zu einem Druck von 6 bis 11 bar erfolgt.

Die Druckabsenkung im Rahmen des Absaugvorgangs wird vorzugsweise mit einem steilen Druckabfallgradienten durchgeführt, so daß die sich ergebende Druckerniedrigung einen ausgeprägten Lockerungseffekt im Fleisch erzeugt, der zur Entkrampfung und Destabilisierung der Fasern führt. Es hat sich gezeigt, daß es dabei vorteilhaft ist, während des Absaugvorgangs in der ersten Phase des Absaugvorgangs mit einem steileren Druckabbaugradienten als in der letzten Phase des Absaugvorgangs zu arbeiten. Dies kann beispielsweise dadurch erreicht werden, daß vor und während des Absaugvorgangs Sauerstoff erzeugt und außerhalb des geschlossenen Raums mit Überdruck, vorzugsweise mit 6 bar Überdruck gegenüber dem Atmosphärendruck in einem Sauerstoff tank gespeichert wird, und daß zumindest der anfängliche Aufbau der Sauerstoffatmosphäre in dem abgeschlossenen Raum nach Beendigung des Absaugvorgangs mittels des gespeicherten Sauerstoffs beschleunigt durchgeführt wird, bis bei etwa 0 bis 0,6 bar ein Druckausgleich zwischen dem abgeschlossenen Raum und dem Sauerstofftank stattfindet, woraufhin die Verbindung zwischen dem Sauerstofftank und dem abgeschlossenen Raum unterbrochen und zum weiteren Aufbau des Überdrucks dem abgeschlossenen Raum Sauerstoff direkt von einer Sauerstoffquelle zugeführt wird.

Eine weitere Ausführungsform des erfindungsgemäßen Verfahrens ist dadurch gekennzeichnet, daß während der Zwischenlagerzeit eine kontinuierliche oder diskontinuierliche Ergänzung der Sauerstoffatmosphäre in dem geschlossenen Raum vorgenommen wird, wobei vorzugsweise in den geschlossenen Raum kontinuierlich Sauerstoff mit einem Druck eingeleitet wird, der höher als ein vorgebbarer Ablaßdruck ist, so daß sich aufgrund der Druckdifferenz eine kontinuierliche Durchströmung einstellt. Durch diese vorzugsweise kontinuierliche Ergänzung von Sauerstoff in dem abgeschlossenen Raum kann der ursprüngliche Sauerstoffgehalt in dem Raum während der gesamten Zwischenlagerzeit aufrechterhalten werden, so daß sich ein besonders guter Reifungs- und Konservierungseffekt einstellt.

Je nach Art des Frischfleisches sind unterschiedliche Ausführungsformen der Erfindung besonders vorteilhaft. So werden bei Rind-, Kalb-, Lamm-, Wild-, Geflügelfleisch und Fisch besonders gute Resultate erzielt, wenn der geschlossene Raum während der Zwischenlagerzeit auf einer Kühlraumtemperatur gehalten und der Sauerstoff dem geschlossenen Raum mit einer Temperatur von -3° C bis +3° C, insbesondere 0°C zugeführt wird. Bei Rohwurst und Schinken, die bzw. der auch unter den Sammelbegriff "Frischfleisch" fallen soll, kann es dagegen vorteilhaft sein, die Temperatur innerhalb des geschlossenen Raums während der Zwischenlagerzeit auf einer höheren Temperatur, beispielsweise +20° C zu halten.

Zur Durchführung des erfindungsgemäßen Verfahrens wird eine Vorrichtung gemäß Anspruch 12 verwendet.

Durch die Anordnung der Einlaß- und Abführöffnung an gegenüberliegenden Stellen des Gehäuses wird gewährleistet, daß der gesamte Innenraum weitgehend gleichmäßig mit Sauerstoff gefüllt wird. In vorteilhafter Weise kann die Kapazität der Vorrichtung erweitert werden, indem an den Gehäusekörper ein Gehäuseerweiterungselement angeschlossen wird. Dabei wird das Gehäuseerweiterungselement vorteilhafterweise an der Seitenwandung des Gehäusekörpers angebracht, die der Öffnung zum Einbringen/Herausnehmen des Frischfleisches gegenüberliegt, so daß der Innenraum der Vorrichtung geradlinig und langgestreckt verläuft.

Indem in der der Verbindungsöffnung gegenüberliegenden Seitenwandung des Gehäuseerweiterungselements eine der Verbindungsöffnung entsprechende weitere Verbindungsöffnung vorgesehen ist, kann die Anlage beliebig durch Gehäuseerweiterungselemente erweitert werden. Die weitere Verbindungsöffnung in dem letzten Gehäuseerweiterungselement wird dann durch einen Deckel verschlossen.

Da gemäß der vorliegenden Erfindung sehr hohe Drücke in dem durch das Gehäuse gebildeten abgeschlossenen Raum erzeugt werden sollen, müssen die Verbindungen zwischen dem Gehäusekörper und den Gehäuseerweiterungselementen sowie dem Deckel entsprechend ausgebildet sein. Dies geschieht in vorteilhafter Weise durch Verbindungsflansche, die entsprechend um die Verbindungsöffnungen bzw. an dem Deckel vorgesehen sind. Solche Flanschverbindungen sind aus der Hochdrucktechnik bekannt und bedürfen deshalb hier keiner weiteren Erläuterung.

Gemäß einer weiteren Ausführungsform sind in den Gehäuseerweiterungen jeweils dieselben Einlaß- und Abführöffnungen wie in dem Gehäusekörper vorgesehen, um bei einer sehr großen Vorrichtung einen ausreichend schnellen Absaugvorgang und einen ausreichend schnellen Druckaufbau sowie eine gute Zirkulation des während der Zwischenlagerzeit strömenden Sauerstoffs zu gewährleisten.

Um die Gehäusetür luft- und druckdicht verschließen zu können, ist nach einer vorteilhaften Ausführungsform der Erfindung eine pneumatische Dichtung in der Form eines um die Öffnung in einem geschlossenen Umlauf herumgeführten Schlauches vorgesehen, dessen Durchmesser durch Zuführung eines Fluids elastisch erweiterbar ist. Die luft- und druckdichte Verschließung kann auch durch einen Bajonettverschluß erfolgen.

Gemäß einer vorteilhaften Ausführungsform der Erfindung ist zur Speicherung von Sauerstoff ein außerhalb des Gehäuses angeordneter Sauerstoff tank vorgesehen, der über eine mittels eines Magnetventils verschließbare Abzweigleitung sowohl mit dem Sauerstofferzeuger als auch mit der Einlaßöffnung verbunden ist. Mit Hilfe dieses Sauerstofftanks ist es möglich, bereits während der Absaugphase von einer Sauerstoffquelle zugeführten Sauerstoff zu mit erhöhtem Druck zu speichern, so daß nach Beendigung der Absaugphase der im Sauerstofftank gespeicherte Sauerstoff sehr schnell in den geschlossenen Raum eingeleitet werden kann.

Hierbei kann die Sauerstoffquelle ein Sauerstofferzeuger oder ein Sauerstoffspeicher sein, wobei insbesondere bei kleinen Anlagen die Verwendung einer Sauerstoffflasche vorteilhaft ist.

Im übrigen kann der Sauerstoff flüssig oder gasförmig zugeführt werden.

Vorteilhafterweise ist der Abführöffnung ein Überdruckventil zugeordnet, das bei einem vorgebbaren Druck in dem abgeschlossenen Raum des Gehäuses anspricht. Hierdurch ist es möglich, die Sauerstoffatmosphäre im geschlossenen Raum bis zum Öffnungsdruck des Überdruckventils aufzubauen und anschließend unter Beibehaltung dieses Drucks eine kontinuierliche Sauerstoffströmung aufrechtzuerhalten.

Weitere vorteilhafte Ausgestaltungen der Erfindung sind aus den Unteransprüchen ersichtlich.

Die Erfindung wird nachfolgend anhand der Zeichnung beispielsweise näher erläutert; in dieser zeigt:
- Fig. 1: eine schematische Seitenansicht einer Vorrichtung zur Durchführung des erfindungsgemäßen Verfahrens,
- Fig. 2: eine schematische Ansicht eines in die Vorrichtung nach Fig. 1 einfahrbaren Trägergestell,
- Fig. 3: eine schematische Darstellung zur Verdeutlichung der Funktionsweise der Vorrichtung zur Durchführung des erfindungsgemäßen Verfahrens, und
- Fig. 4: eine schematische Seitenansicht einer durch ein Gehäuseerweiterungselement erweiterten Vorrichtung.

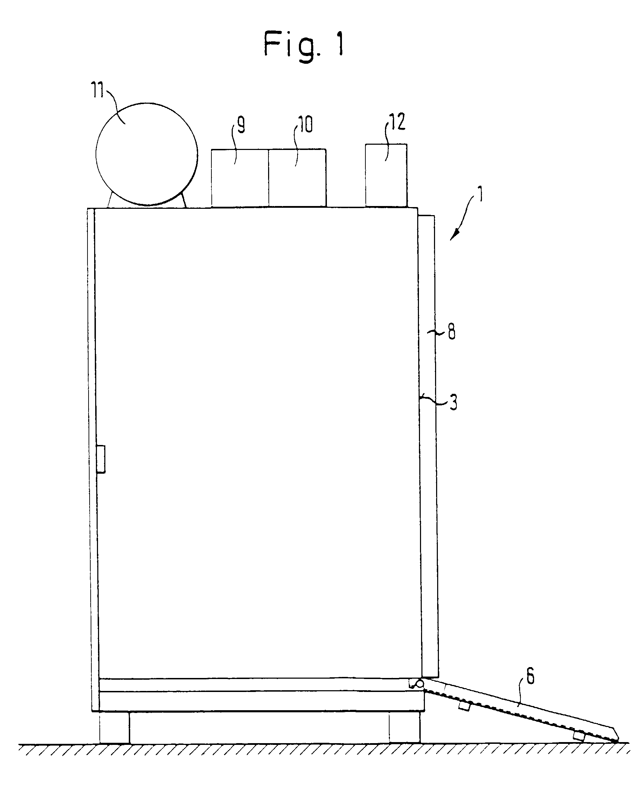

Fig. 1 zeigt eine erfindungsgemäße Vorrichtung mit einem aus einer Schweißkonstruktion bestehenden, geschlossen ausgebildeten Gehäuse 1 mit einer beladeseitigen Öffnung 3, die mittels einer Gehäusetür 8 dicht verschließbar ist.

Eine vorzugsweise einhängbar ausgebildete Auffahrrampe 6 ist im Türbereich an dem Gehäuse 1 angelenkt. Diese Auffahrrampe 6 kann so ausgebildet sein, daß sie in den Innenraum des Gehäuses 1 verschwenkt und dort verstaut werden kann, so daß sie bei Bedarf jederzeit zur Verfügung steht, bei geschlossenem Gehäuse jedoch nie störend in Erscheinung tritt. Auf dem Gehäuse 1 sind außenseitig ein Sauerstofferzeuger 9, eine Evakuierungspumpe 10 sowie ein Sauerstofftank 11 und eine elektronische Steuereinheit 12 angebracht.

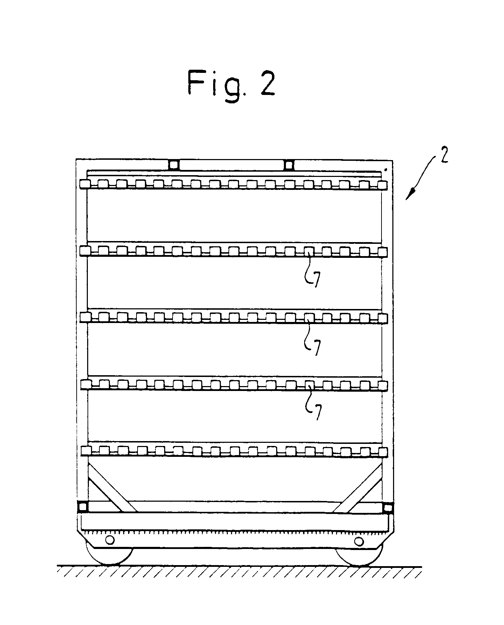

Fig. 2 zeigt ein aus einer Schweißkonstruktion bestehendes Trägergestell 1 mit einer Mehrzahl von Hängeeinrichtungen 7 für das Frischfleisch.

Durch Aufhängen oder kleinflächige Abstützung des Frischfleisches ist gewährleistet, daß das Frischfleisch allseitig für den im Innenraum des Gehäuses 1 vorhandenen Reinstsauerstoff zugänglich ist und demgemäß der Sauerstoff unbehindert in das gesamte Fleischvolumen eindiffundieren kann.

Das Trägergestell 2 ist fahrbar ausgebildet und wird im beladenen Zustand über die Auffahrrampe 6 in den Innenraum des Gehäuses 1 eingefahren. Nach dem Hochschwenken der Auffahrrampe 6 kann die Türe 8 des Gehäuses 1 geschlossen und mit dem Sauerstoffbehandlungsverfahren begonnen werden.

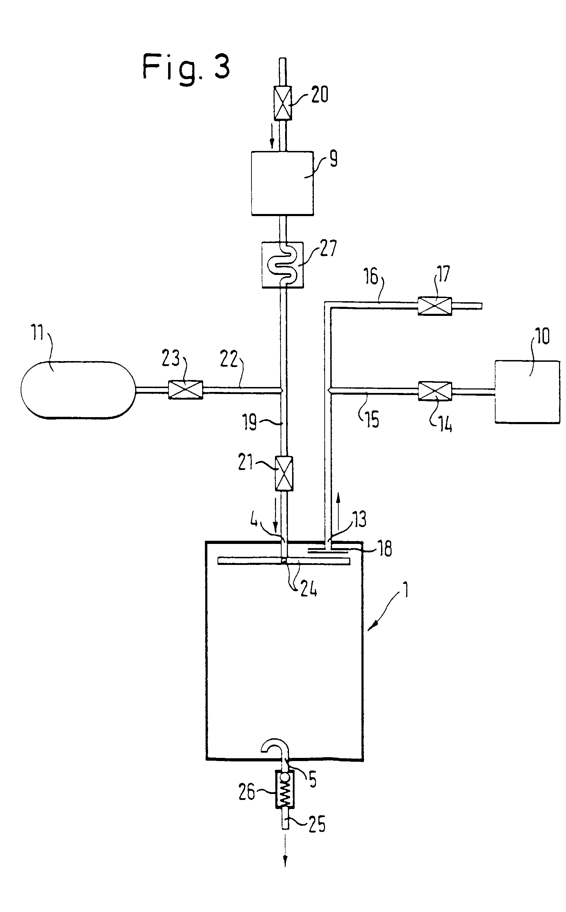

Das Gehäuse 1 weist ferner, wie Fig. 3 in schematischer Weise zeigt, deckenseitig eine Evakuierungsöffnung 13 und eine Sauerstoff-Einlaßöffnung 4 sowie bodenseitig eine Sauerstoff-Abführöffnung 5 auf.

Die Evakuierungspumpe 10 ist über eine mittels eines Magnetventils 14 verschließbare Rohrleitung oder einen Schlauch 15 mit der Evakuierungsöffnung 13 verbunden.

Von der Rohrleitung 15 zweigt zwischen dem Magnetventil 14 und der Evakuierungsöffnung 13 eine Rohrleitung oder ein Schlauch 16 ab, der ebenfalls mittels eines Magnetventils 17 verschließbar ist und in die Umgebungsatmosphäre mündet.

Am innerhalb des Gehäuses 1 liegenden Ende der Rohrleitung 15 sind zwei parallele, horizontale, plattenförmige Elemente 18 vorgesehen, wobei das untere plattenförmige Element das offene Ende der Rohrleitung 15 überdeckt. Auf diese Weise entsteht ein ringförmiger Spalt zwischen den beiden plattenförmigen Elementen 18, der ein großflächiges Absaugen der Luft bzw. des Sauerstoffs aus dem Gehäuse 1 und einen gleichmäßigen Evakuierungseffekt fördert.

Der Sauerstofferzeuger 9 ist über eine Rohrleitung oder einen Schlauch 19 mit der Einlaßöffnung 4 verbunden, wobei das Ansaugende der Rohrleitung 15 mittels eines Magnetventils 20 verschließbar ist.

Zwischen dem Sauerstofferzeuger 9 und der Einlaßöffnung 4 ist weiterhin ein Wärmetauscher 27 in Form eines Peltier-Elementes vorgesehen. Hier wird die Temperatur des Sauerstoffs gemessen und der Sauerstoff auf circa 0°C abgekühlt. Die Kühlung des Sauerstoffs trägt bedeutend zur Frische des Fleisches bei.

Zwischen dem Sauerstofferzeuger 9 bzw. dem Wärmetauscher 27 und der Einlaßöffnung 4 ist weiterhin ein Magnetventil 21 vorgesehen.

Von der Rohrleitung 19 zweigt zwischen dem Magnetventil 21 und dem Wärmetauscher 27 eine weitere Rohrleitung oder ein Schlauch 22 ab, welcher durch ein Magnetventil 23 verschließbar ist und zum Sauerstofftank 11 führt.

Die Rohrleitung 19 endet innerhalb des Gehäuses 1 in einer Sauerstoffverteilungsvorrichtung, die aus sternförmig angeordneten, d. h. vom Ende der Rohrleitung 19 sternförmig nach außen gerichteten Rohrelementen 24 besteht. Diese Rohrelemente 24 dienen zur gleichmäßigen Verteilung des zugeführten Sauerstoffs über den gesamten Innenraum des Gehäuses 1.

Die Abführung des Sauerstoffs aus dem Innenraum des Gehäuses 1 erfolgt ab einem bestimmten, vorgebbaren Druck über eine Rohrleitung oder einen Schlauch 25, der unterhalb dieses vorgebbaren Drucks von einem Überdruckventil 26 verschlossen wird. Das innerhalb des Gehäuses 1 angeordnete Ende der Rohrleitung 25 ist bogenförmig zum Boden des Gehäuses 1 hin zurückgeführt, um das Eindringen von Wasser oder Schmutz zu verhindern.

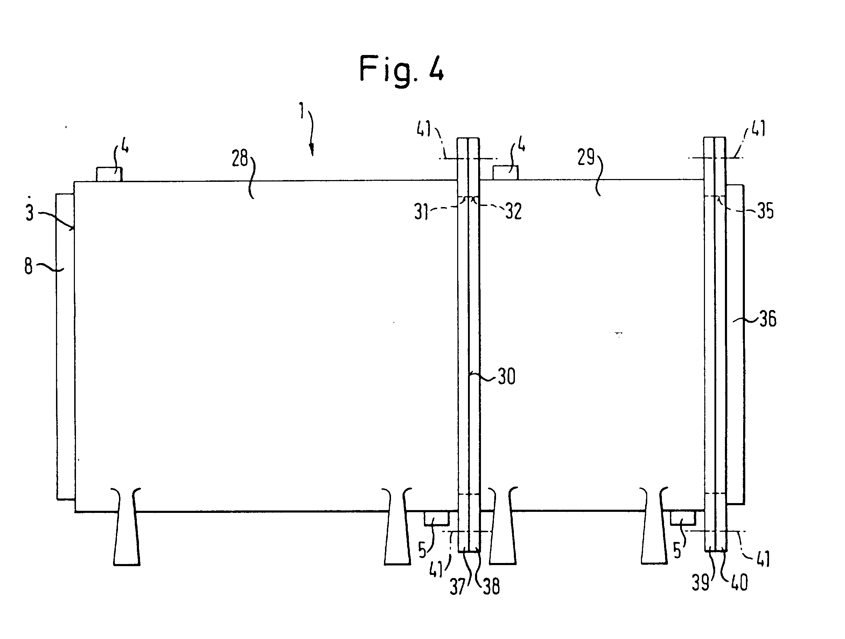

In Fig. 4 ist das Gehäuse 1 segmentartig ausgebildet und besteht aus einem Gehäusekörper 28 sowie einem Gehäuseerweiterungselement 29. Das Gehäuseerweiterungselement 29 ist an der Seitenwandung 30 des Gehäusekörpers 28 angeordnet, die der beladeseitigen Öffnung 3 des Gehäusekörpers 28 gegenüberliegt. Dabei liegen Verbindungsöffnungen 31, 32 des Gehäusekörpers 28 und des Erweiterungselements 29, die den größten Teil der Flächen der entsprechenden Seitenwandungen einnehmen, deckungsgleich aneinander.

Das Erweiterungselement 29 weist an seiner der Verbindungsöffnung 32 gegenüberliegenden Seitenwandung eine weitere Verbindungsöffnung 35 auf, um ein weiteres Gehäuseerweiterungselement anschließen zu können. Diese Verbindungsöffnung 35 ist vorliegend durch einen Deckel 36 luftdicht verschlossen.

Bei der dargestellten Ausführungsform sind um die Verbindungsöffnungen 31, 32, 35 des Gehäusekörpers 28 und des Gehäuseerweiterungselements 29 sowie an dem Deckel 36 Verbindungsflansche 37, 38, 39, 40 vorgesehen. In Fig. 4 ist angedeutet, daß die Verbindungsflansche 37, 38, 39, 40 an ihrem Umfang verteilt gleichmäßig Öffnungen 41 aufweisen, durch die Spannschrauben zum Verbinden der Verbindungsflansche 37, 38, 39, 40 gesteckt werden können. Zwischen den Verbindungsflanschen 37, 38, 39, 40 ist jeweils ein Dichtungsmittel vorgesehen, um in der Evakuierungsphase ein Eindringen von Luft und in der Druckphase ein Austreten von Sauerstoff zu vermeiden.

Diese Vorrichtung arbeitet bei der Durchführung des erfindungsgemäßen Verfahrens folgendermaßen:

Nach der Beschickung des Gehäuses 1 mit Frischfleisch, was beispielsweise mit dem in Fig. 2 dargestellten Trägergestell 2 erfolgt, wird die Gehäusetür 8 geschlossen und verriegelt. Die Steuereinheit 12 veranlaßt nun die Befüllung einer nicht dargestellten, pneumatischen Dichtung in der Form eines um die Öffnung 3 in einen geschlossenen Umlauf herumgeführten Schlauches mit Luft hohen Druckes, wodurch der Durchmesser des Schlauches erweitert wird, um die Türe 8 gegenüber dem Gehäusekörper 28 gas- und druckdicht abzudichten.

In diesem Anfangszustand sind die Magnetventile 14, 17, 20, 21 und 23 geschlossen.

Anschließend wird der Innenraum des Gehäuses etwa eine Stunde lang evakuiert, wobei das Magnetventil 14 über die Steuereinheit 12 geöffnet wird. Am Ende der einstündigen Evakuierungszeit ist innerhalb des Gehäuses 1 nahezu Vakuum erreicht, d. h. es herrscht ein Unterdruck von 50 bis 100 mbar.

Schon etwa zwei Stunden vor dem Beginn der Evakuierung des Gehäuses 1 beginnt die Sauerstofferzeugung über den Sauerstofferzeuger 9, wobei die Magnetventile 20 und 23 geöffnet werden, das Magnetventil 21 jedoch noch geschlossen bleibt.

Der Sauerstoff strömt somit nach einer entsprechenden Reinigung über den Wärmetauscher 20 und die Rohrleitung 22 in den Sauerstoff tank 11, in dem am Ende der einstündigen Evakuierungsdauer ein Überdruck von etwa 6 bar herrscht.

Nach etwa einer Stunde wird die Evakuierung des Gehäuseinnenraums beendet und das Magnetventil 14 geschlossen. Das Magnetventil 21 wird nun geöffnet, so daß der unter Überdruck stehende Sauerstoff aus dem Sauerstofftank 11 in den Innenraum des Gehäuses 1 strömen kann. Nach etwa fünf Minuten findet zwischen dem Sauerstofftank 11 und dem Innenraum des Gehäuses 1 ein Druckausgleich statt, der etwa bei 0 bis 0,6 bar Überdruck liegt.

Nachdem die Sauerstoffatmosphäre innerhalb des Gehäuses 1 über den Vorratstank 11 relativ schnell aufgebaut worden ist, schließt das Magnetventil 23 beim Druckausgleich, so daß der Sauerstoff vom Sauerstofferzeuger 9 auf direktem Weg in den Gehäuseinnenraum geleitet wird.

Nach einer mehrstündigen Aufbauphase ist im Gehäuseinnenraum ein Sauerstoffdruck von etwa 10 bis 11 bar erreicht, bei dem das Überdruckventil 26 öffnet. Ab diesem Zeitpunkt strömt der Sauerstoff kontinuierlich vom Bereich der Einlaßöffnung 4 zur Abführöffnung 5, so daß der Gehäuseinnenraum ständig mit frischem Sauerstoff beflutet wird. Dieser Zustand wird bis zum Ende der Zwischenlagerzeit beibehalten, die bei Schweinefleisch zwei bis fünf Tage und bei Rindfleisch fünf bis neun Tage dauern kann.

Nach der Beendigung der gewünschten Zwischenlagerzeit wird der Sauerstofferzeuger 9 ausgeschaltet und die beiden Magnetventile 20 und 21 werden geschlossen. Das Magnetventil 17 wird einige Minuten lang geöffnet, um einen Druckausgleich zwischen dem Gehäuseinnenraum und der Umgebungsatmosphäre zu erhalten.

Vor dem Öffnen der Gehäusetür 8 wird zwangsläufig die Luft aus der pneumatischen Türdichtung über ein entsprechend angesteuertes Magnetventil abgelassen, um zu vermeiden, daß beim Öffnen der Tür durch den fehlenden Gegendruck die Türdichtung beschädigt wird.

## Patentansprüche

1. Verfahren zur Behandlung von Frischfleisch, insbesondere zum Reifen und Konservieren von frischem Rind-, Schweine-, Kalb-, Lamm-, Wild-, Geflügelfleisch, Fisch, Rohwurst und Schinken, bei dem das Frischfleisch in einem luftdicht verschließbaren Raum in einer von der Außenatmosphäre verschiedenen Gasatmosphäre während einer vorgebbaren Zeit zwischengelagert wird, wobei in dem luftdicht verschließbaren Raum nach Abführung des der Umgebungsatmosphäre entsprechenden Gases eine Sauerstoffatmosphäre mit einem über dem Atmosphärendruck liegenden Druck aufgebaut wird,
**dadurch gekennzeichnet,**
daß die Sauerstoffatmosphäre in dem abgeschlossenen Raum auf einen Überdruck gegenüber dem Atmosphärendruck von 6 bis 20 bar, insbesondere von über 11 bar gebracht wird und daß dieser Überdruck während der gesamten weiteren Zwischenlagerzeit gehalten wird.

2. Verfahren nach Anspruch 1,
dadurch **gekennzeichnet,**
daß die Sauerstoffatmosphäre einen Reinheitsgrad von wenigstens 50%, insbesondere mehr als 80% und vorzugsweise von mindestens 93% besitzt.

3. Verfahren nach Anspruch 1 oder 2,
dadurch **gekennzeichnet,**
daß der Absaugvorgang während einer Zeitspanne von wenigen Minuten bis zu sechs Stunden, insbesondere von eins bis drei und vorzugsweise von einer Stunde durchgeführt wird, wobei der Druck in dem abgeschlossenen Raum auf einen deutlich unter dem Atmosphärendruck liegenden Druck, insbesondere auf einen Unterdruck gegenüber dem Atmosphärendruck von etwa 50 bis 100 mbar abgesenkt wird.

4. Verfahren nach einem der Ansprüche 1 bis 3,
dadurch **gekennzeichnet,**
daß während des Absaugvorgangs in der ersten Phase des Absaugvorgangs mit einem steileren Druckabbaugradienten als in der letzten Phase des Absaugvorgangs gearbeitet wird.

5. Verfahren nach einem der Ansprüche 1 bis 4,
dadurch **gekennzeichnet,**
daß vor und/oder während des Absaugvorgangs Sauerstoff erzeugt und außerhalb des geschlossenen Raums mit Überdruck, vorzugsweise mit 6 bar Überdruck gegenüber dem Atmosphärendruck in einem Sauerstofftank gespeichert wird, und daß zumindest der anfängliche Aufbau der Sauerstoffatmosphäre in dem abgeschlossenen Raum nach Beendigung des Absaugvorgangs mittels des gespeicherten Sauerstoffs beschleunigt durchgeführt wird.

6. Verfahren nach einem der Ansprüche 1 bis 5,
dadurch **gekennzeichnet,**
daß nach dem Druckausgleich zwischen dem Sauerstofftank und dem abgeschlossenen Raum die Verbindung zwischen dem Sauerstofftank und dem abgeschlossenen Raum unterbrochen und der zum weiteren Aufbau des Überdrucks dem abgeschlossenen Raum erforderliche Sauerstoff direkt von der Sauerstoffquelle zugeführt wird.

7. Verfahren nach Anspruch 6,
dadurch **gekennzeichnet,**
daß der Druckausgleich bei etwa 0 bis 0,6 bar stattfindet.

8. Verfahren nach Anspruch 6 oder 7,
dadurch **gekennzeichnet,**
daß der Sauerstoff dem abgeschlossenen Raum von der Sauerstoffquelle mit einem Druck zugeführt wird, der etwas höher als der in dem abgeschlossenen Raum zu erreichende Druck ist.

9. Verfahren nach einem der Ansprüche 1 bis 6,
dadurch **gekennzeichnet,**
daß während der Zwischenlagerzeit eine kontinuierliche oder diskontinuierliche Ergänzung der Sauerstoffatmosphäre in dem geschlossenen Raum vorgenommen wird, wobei vorzugsweise in den geschlossenen Raum kontinuierlich Sauerstoff mit einem Druck eingeleitet wird, der höher ist als ein vorgebbarer Ablaßdruck, so daß sich aufgrund der Druckdifferenz eine kontinuierliche Durchströmung einstellt.

10. Verfahren nach einem der Ansprüche 1 bis 9,
dadurch **gekennzeichnet,**
daß als Zwischenlagerzeit bei Schweinefleisch 2 bis 5 Tage und bei Rindfleisch 5 bis 9 Tage gewählt wird.

11. Verfahren nach einem der Ansprüche 1 bis 10,
dadurch **gekennzeichnet,**
daß das Frischfleisch in gut gekühltem Zustand, insbesondere mit einer Temperatur im Bereich von 1°C bis 3°C, in den geschlossenen bzw. verschließbaren Raum eingebracht wird, wobei vorzugsweise das den geschlossenen Raum enthaltende Behältnis während der Zwischenlagerzeit in einem Kühlraum von einer Temperatur im Bereich von -3°C bis +3°C angeordnet wird.

12. Vorrichtung zur Durchführung des Verfahrens nach einem der vorhergehenden Ansprüche mit einem Gehäuse (1) mit einem Gehäusekörper (28), in dem eine luftdicht verschließbare Öffnung (3) zum Einbringen/Herausnehmen des Frischfleisches, eine an zumindest einen Sauerstofferzeuger (9) anschließbare, insbesondere deckenseitig mündende Einlaßöffnung (4) und zumindest eine eine definierte Abströmung aus dem Innenraum des Gehäuses (1) gewährleistende Abführöffnung (5), die vorzugsweise unterhalb der Einlaßöffnung (4), insbesondere am Boden oder Bodennähe des Gehäuses (1) angeordnet ist, vorgesehen sind
**gekennzeichnet,**
durch ein Gehäuseerweiterungselement (29), das an einer Seitenwandung des Gehäuses (1) und vorzugsweise an der der Öffnung (3) zum Einbringen/Herausnehmen des Frischfleisches gegenüberliegenden Seitenwandung anschließbar ist, wobei im angeschlossenen Zustand eine Verbindungsöffnung (31) der Seitenwandung des Gehäusekörpers (1) und eine in einer Seitenwandung des Gehäuseerweiterungselements (29) vorgesehene, der Verbindungsöffnung (31) des Gehäusekörpers (28) zugeordnete Verbindungsöffnung (32) aneinanderliegen, und wobei die Verbindungsöffnung (31) in der Seitenwandung (30) des Gehäusekörpers (28) durch einen Deckel (36) verschließbar ist, wenn kein Gehäuseerweiterungselement (29) an den Gehäusekörper (28) angeschlossen ist.

13. Vorrichtung nach Anspruch 12,
dadurch **gekennzeichnet,**
daß in der der Verbindungsöffnung (32) gegenüberliegenden Seitenwandung des Gehäuserweiterungselements (29) eine der Verbindungsöffnung (32) entsprechende Verbindungsöffnung (35) zur Verbindung mit einem weiteren Gehäuseerweiterungselement vorgesehen ist, die durch einen Deckel (36) verschließbar ist.

14. Vorrichtung nach Anspruch 12 oder 13,
dadurch **gekennzeichnet,**
daß an dem Gehäusekörper (28) und dem Gehäuseerweiterungselement (29) um die Verbindungsöffnungen (31, 32, 35) herum sowie an dem Deckel (36) einander zugeordnete Verbindungselemente (37, 38, 39, 40) ausgebildet sind, mittels derer die Bauteile (28, 29, 36) vorzugsweise unter Zwischenschaltung eines Dichtungselements miteinander verbindbar sind.

15. Vorrichtung nach Anspruch 14,
dadurch **gekennzeichnet,**
daß die Verbindungselemente Verbindungsflansche (37, 38, 39, 40) sind.

16. Vorrichtung nach einem der Ansprüche 12 bis 15,
dadurch **gekennzeichnet**,
daß die Verbindungen zwischen dem Gehäusekörper (28) und dem Deckel (36) oder der Gehäuseerweiterung (29) sowie zwischen der Gehäuseerweiterung (29) und dem Deckel (36) als Hochdruckverbindungen ausgelegt sind.

17. Vorrichtung nach einem der Ansprüche 12 bis 16,
dadurch **gekennzeichnet,**
daß in der Gehäuseerweiterung (29) eine an zumindest einen Sauerstofferzeuger (9) anschließbare, insbesondere deckenseitig mündende Einlaßöffnung (4) und zumindest eine eine definierte Abströmung aus dem Innenraum des Gehäuses (1) gewährleitstende Abführöffnung (5), die vorzugsweise unterhalb der Einlaßöffnung (4), insbesondere am Boden oder in Bodennähe des Gehäuses (1) angeordnet ist, vorgesehen sind.

18. Vorrichtung nach einem der Ansprüche 12 bis 17,
dadurch **gekennzeichnet,**
daß das Gehäuse (1) rechteckig ausgebildet ist.

19. Vorrichtung nach einem der Ansprüche 12 bis 18,
dadurch **gekennzeichnet,**
daß das Gehäuse (1) zylindrisch ausgebildet ist, wobei die Öffnung (3) zum Einbringen/Herausnehmen des Frischfleisches und die Verbindungsöffnungen (31, 32, 35) jeweils in den Stirnflächen des Gehäusekörpers (28) bzw. der Gehäuseerweiterungen (29) vorgesehen sind.

20. Vorrichtung nach einem der Ansprüche 12 bis 19,
dadurch **gekennzeichnet,**
daß zum luft- und druckdichten Verschließen der Gehäusetür (3) eine pneumatische Dichtung vorgesehen ist, die vorzugsweise die Form eines um die Öffnung in einem geschlossenen Umlauf herumgeführten Schlauches vorgesehen ist, dessen Durchmesser durch Zuführung eines Fluids mit einem Überdruck größer 1 bar, insbesondere 6 bis 11 bar, elastisch erweiterbar ist.

21. Vorrichtung nach einem der Ansprüche 12 bis 19,
dadurch **gekennzeichnet,**
daß zum luft- und druckdichten Verschließen der Öffnung (3) durch die Gehäusetür (3) ein Bajonettverschluß vorgesehen ist.

22. Vorrichtung nach einem der Ansprüche 12 bis 21,
dadurch **gekennzeichnet,**
daß die Zuführung des Sauerstoffs über eine innerhalb des Gehäuses (1) angeordnete Sauerstoffverteilungsvorrichtung erfolgt, die aus sternförmig angeordneten, d.h. radial abstehenden Rohrelementen (24) besteht.

23. Vorrichtung nach einem der Ansprüche 12 bis 22,
dadurch **gekennzeichnet,**
daß das Gehäuse (1) zur Abführung des der Umgebungsatmosphäre entsprechenden Gasgemisches eine vorzugsweise an der Decke angeordnete Evakuierungsöffnung (13) aufweist, die auf der Gehäuseinnenseite von einem beabstandeten plattenförmigen Element (18) überdeckt ist.

24. Vorrichtung nach einem der Ansprüche 12 bis 23,
dadurch **gekennzeichnet,**
daß zur Speicherung von Sauerstoff ein außerhalb des Gehäuses angeordneter Sauerstofftank (11) vorgesehen ist, der über eine mittels eines Magnetventils (22) verschließbare Abzweigleitung (23) sowohl mit dem Sauerstofferzeuger (9) als auch mit der Einlaßöffnung (4) verbunden ist.

25. Vorrichtung nach einem der Ansprüche 12 bis 24,
dadurch **gekennzeichnet,**
daß der Abführöffnung bzw. den Abführöffnungen (5) jeweils ein Überdruckventil (26) zugeordnet ist, das bei einem vorgebbaren Druck in dem abgeschlossenen Raum des Gehäuses (1) anspricht.

## Claims

1. Method for the processing of fresh meat, in particular for the maturation and conservation of fresh beef, pork, veal, lamb, game, poultry, fish, raw sausage and ham, wherein the fresh meat is subjected to intermediate storage for a predeterminable time in a chamber closable in an air-tight manner in a gas atmosphere different from the external atmosphere, wherein after extracting the gas corresponding to the environmental atmosphere an oxygen atmosphere with a pressure above the atmospheric pressure is built up in the chamber which can be closed off in air-tight manner, characterised in that the oxygen atmosphere in the closed off chamber is brought to an overpressure with respect to the atmospheric pressure of 6 to 20 bars, in particular of more than 11 bars, and in that this overpressure is maintained for the full further time of intermediate storage.

2. Method in accordance with claim 1, characterised in that the oxygen atmosphere has a degree of purity of at least 50%, in particular more than 80% and preferably of at least 93%.

3. Method in accordance with claim 1 or claim 2, characterised in that the suction process is carried out over a time interval of a few minutes for up to six hours, in particular of from one to three hours and preferably of one hour, with the pressure in the closed off chamber being reduced to a pressure significantly below the atmospheric pressure, in particular to a depression relative to atmospheric pressure of approximately 50 to 100 mbars.

4. Method in accordance with one of the claims 1 to 3, characterised in that during the suction process one operates in the first phase of the suction process with a steeper pressure reduction gradient than in the last phase of the suction process.

5. Method in accordance with one of the claims 1 to 4, characterised in that oxygen is generated prior to and/or during the suction process and is stored outside of the closed chamber in an oxygen tank at an overpressure, preferably at 6 bars of overpressure relative to the atmospheric pressure, and in that at least the initial build up of the oxygen atmosphere in the closed off chamber is carried out in an accelerated manner by means of the stored oxygen after termination of the suction process.

6. Method in accordance with one of the claims 1 to 5, characterised in that after pressure equalisation between the oxygen tank and the closed off chamber the connection between the oxygen tank and the closed off chamber is interrupted and the oxygen required to further build up the overpressure is supplied to the closed off chamber directly from the oxygen source.

7. Method in accordance with claim 6, characterised in that the pressure equalisation takes place at approximately 0 to 0.6 bars.

8. Method in accordance with claim 6 or claim 7, characterised in that the oxygen is supplied to the closed off chamber from the oxygen source at a pressure which is somewhat higher than the pressure to be achieved in the closed off chamber.

9. Method in accordance with one of the claims 1 to 6, characterised in that during the period of intermediate storage a continuous or discontinuous supplementation of the oxygen atmosphere in the closed off chamber is effected, with oxygen being preferably continuously introduced into the closed off chamber at a pressure which is higher than a presettable discharge pressure, so that as a result of the pressure difference a continuos throughflow sets in.

10. Method in accordance with one of the claims 1 to 9, characterised in that for pork 2 to 5 days and for beef 5 to 9 days is selected as the period of intermediate storage.

11. Method in accordance with one of the claims 1 to 10, characterised in that the fresh meat is introduced in a well-cooled state, in particular at a temperature in the range from 1° C to 3° C into the closed or sealable chamber, with the container containing the closed chamber preferably being arranged during the period of intermediate storage in a cool-room at a temperature in the range from -3° C to +3° C.

12. Apparatus for carrying out the method in accordance with one of the preceding claims comprising a housing (1) having a housing body (28) in which there are provided an opening (3) which can be closed in air-tight manner for the introduction / removal of the fresh meat, an inlet opening (4) which can be connected to at least one oxygen generator (9) and which opens in particular at the ceiling side and at least one discharge opening (5) which ensures a defined outflow from the inner chamber of the housing (1), with the discharge opening (5) preferably being arranged beneath the inlet opening (4), in particular at the floor or in the vicinity of the floor of the housing (1), characterised by a housing enlargement element (29) which can be connected to a side wall of the housing (1) and preferably to the side wall opposite to the opening (3) for the introduction / removal of the fresh meat, wherein, in the connected state, a connection opening (31) of the side wall of the housing body (1) and a connection opening (32) provided in a side wall of the housing enlargement element (29) and associated with the connection opening (31) of the housing body (28) lie next to one another, and wherein the connection opening (31) in the side wall (30) of the housing body (28) can be closed by a cover (36) when no housing enlargement element (29) is attached to the housing body (28).

13. Apparatus in accordance with claim 12, characterised in that a connection opening (35) corresponding to the connection opening (32) is provided in the side wall of the housing enlargement element (29) opposite to the connection opening (32) for the connection with a further housing enlargement element which can be closed by a cover (36).

14. Apparatus in accordance with claim 12 or claim 13, characterised in that mutually associated connecting elements (37, 38, 39, 40) are formed on the housing body (28) and on the housing enlargement element (29) around the connection openings (31, 32, 35) and also at the cover (36) by means of which the components (28, 29, 36) can be connected to one another, preferably with a sealing element inserted between them.

15. Apparatus in accordance with claim 14, characterised in that the connection elements are connection flanges (37, 38, 39, 40).

16. Apparatus in accordance with one of the claims 12 to 15,
characterised in that the connections between the housing body (28) and the cover (36) or the housing enlargement (29) and also between the housing enlargement (29) and the cover (36) are designed as high pressure connections.

17. Apparatus in accordance with one of the claims 12 to 16,
characterised in that there are provided, in the housing enlargement (29), an inlet opening (4) which can be connected to at least one oxygen generator (9), and which in particular opens at the ceiling side, and at least one discharge opening (5) which ensures a defined outflow from the inner chamber of the housing (1) and is preferably arranged beneath the inlet opening (4), in particular at the floor or in the vicinity of the floor of the housing (1).

18. Apparatus in accordance with one of the claims 12 to 17,
characterised in that the housing (1) is of rectangular shape.

19. Apparatus in accordance with one of the claims 12 to 18,
characterised in that the housing (1) is of cylindrical shape, with the opening (3) for the introduction / removal of the fresh meat and the connection openings (31, 32, 35) being respectively provided in the end faces of the housing body (28) and of the housing enlargements (29).

20. Apparatus in accordance with one of the claims 12 to 19,
characterised in that a pneumatic seal is provided for the air- and pressure-tight sealing of the housing door (3) and is preferably provided in the form of a hose which is guided in a closed circuit around the opening, with the diameter of the hose being resiliently enlargeable by the supply of a fluid with an overpressure greater than 1 bar, in particular of 6 to 11 bars.

21. Apparatus in accordance with one of the claims 12 to 19,
characterised in that a bayonet closure is provided for the air- and pressure-tight closure of the opening (3) by the housing door (3).

22. Apparatus in accordance with one of the claims 12 to 21,
characterised in that the supply of the oxygen takes place via an oxygen distribution device arranged inside the housing (1) which consists of tube elements (24) arranged in star-like manner, i.e. radially projecting.

23. Apparatus in accordance with one of the claims 12 to 22,
characterised in that the housing (1) has an evacuation opening (13) which is preferably arranged at the ceiling for the extraction of the gas mixture corresponding to the environmental atmosphere, with the evacuation opening being covered over at the inner side of the housing by a plate-like element (18) spaced from it.

24. Apparatus in accordance with one of the claims 12 to 23,
characterised in that an oxygen tank (11) arranged outside of the housing is provided for the storage of oxygen and is connected via a branch line (23) closable by means of a solenoid valve (22) both to the oxygen generator (9) and also to the inlet opening (4).

25. Apparatus in accordance with one of the claims 12 to 24,
characterised in that in each case an overpressure valve (26) is associated with the extraction opening or the extraction openings (5) and responds at a predeterminable pressure in the closed off chamber of the housing (1).

## Revendications

1. Procédé pour le traitement de viande fraîche, en particulier pour la maturation et la conservation de viande fraîche de boeuf, de porc, de veau, d'agneau, de gibier, de volaille, de poisson, de charcuterie à cuire et de jambon, dans lequel la viande fraîche est entreposée pendant un temps prédéterminé dans un local susceptible d'être refermé de manière étanche à l'air, dans une atmosphère gazeuse différente de l'atmosphère extérieure, et après évacuation des gaz correspondant à l'atmosphère environnante on établit dans le local refermé de manière étanche à l'air une atmosphère d'oxygène avec une pression supérieure à la pression atmosphérique,
caractérisé en ce que l'atmosphère d'oxygène dans le local refermé est amenée à une surpression de 6 à 20 bars au-dessus de la pression atmosphérique, en particulier supérieure à 11 bars, et en ce que cette pression est maintenue pendant la totalité du temps de stockage.

2. Procédé selon la revendication 1,
caractérisé en ce que l'atmosphère d'oxygène présente un degré de pureté d'au moins 50%, en particulier supérieur à 80 % et de préférence d'au moins 93 %.

3. Procédé selon l'une ou l'autre des revendications 1 et 2,
caractérisé en ce que l'opération d'aspiration est exécutée pendant une période temporelle allant de quelques minutes jusqu'à 6 heures, en particulier de 1 à 3 heures, et de préférence d'une heure, et la pression dans le local refermé est abaissée jusqu'à une pression nettement inférieure à la pression atmosphérique, en particulier à une dépression d'environ 50 à 100 millibars par rapport à la pression atmosphérique.

4. Procédé selon l'une des revendications 1 à 3,
caractérisé en ce que pendant l'opération d'aspiration, on opère dans la première phase de l'opération d'aspiration avec un gradient de réduction de pression plus raide que dans la dernière phase de l'opération d'aspiration.

5. Procédé selon l'une des revendications 1 à 4,
caractérisé en ce qu'avant et/ou pendant l'opération d'aspiration, on produit de l'oxygène et on le stocke à l'extérieur du local refermé dans un réservoir d'oxygène avec une surpression, de préférence une surpression de 6 bars par rapport à la pression atmosphérique, et en ce que l'établissement initial de l'atmosphère d'oxygène dans le local refermé est exécuté au moins de façon accélérée après terminaison de l'opération d'aspiration au moyen de l'oxygène stocké.

6. Procédé selon l'une des revendications 1 à 5,
caractérisé en ce qu'après égalisation de pression entre le réservoir d'oxygène et le local refermé, on interrompt la liaison entre le réservoir d'oxygène et le local refermé, et l'oxygène nécessaire pour la poursuite de l'établissement de la surpression est amené directement au local refermé depuis la source d'oxygène.

7. Procédé selon la revendication 6,
caractérisé en ce que l'égalisation de pression a lieu vers environ 0 à 0,6 bar.

8. Procédé selon l'une ou l'autre des revendications 6 et 7,
caractérisé en ce que l'oxygène est amené dans le local refermé depuis la source d'oxygène sous une pression qui est quelque peu supérieure à la pression à atteindre dans le local refermé.

9. Procédé selon l'une des revendications 1 à 6,
caractérisé en ce que pendant le temps de stockage on procède à un complément en continu ou en discontinu de l'atmosphère d'oxygène dans le local refermé, et l'on introduit de préférence dans le local refermé de l'oxygène en continu sous une pression qui est supérieure à une pression d'échappement prédéterminée, de sorte qu'il s'établit un écoulement traversant continu en raison de la différence de pression.

10. Procédé selon l'une des revendications 1 à 9,
caractérisé en ce que l'on choisit comme temps de stockage une durée de 2 à 5 jours dans le cas de viande de porc et de 5 à 9 jours dans le cas de viande de boeuf.

11. Procédé selon l'une des revendications 1 à 10,
caractérisé en ce que la viande fraîche est introduite dans le local à refermer dans un état bien refroidi, en particulier avec une température dans la plage de 1 à 3 °C, et en ce que le réceptacle qui contient le local refermé est de préférence agencé pendant la durée de stockage dans une chambre frigorifique à une température dans la plage de -3 à +3°C.

12. Appareil pour la mise en oeuvre du procédé selon l'une des revendications précédentes, comprenant une enceinte (1) avec un corps d'enceinte (23) dans lequel sont ménagées une ouverture (3) susceptible d'être refermée de manière étanche à l'air en vue de l'introduction/extraction de la viande fraîche, une ouverture d'admission (4) susceptible d'être raccordée à au moins un dispositif de production d'oxygène (9) et en particulier débouchant dans le plafond, et au moins une ouverture d'évacuation (5) qui garantit un écoulement sortant défini hors de la chambre intérieure de l'enceinte (1), ladite ouverture d'évacuation étant de préférence agencée au-dessous de l'ouverture d'admission (4) et en particulier au sol ou au voisinage du sol de l'enceinte (1),
caractérisé par un élément d'extension (29), susceptible d'être accolé à une paroi latérale de l'enceinte (1), et de préférence à la paroi latérale opposée à l'ouverture (3) prévue pour l'introduction/extraction de la viande fraîche, de sorte que dans la condition accolée, une ouverture de liaison (31) de la paroi latérale du corps d'enceinte (1) et une ouverture de liaison (32) prévue dans une paroi latérale de l'élément d'extension (29) et associée à l'ouverture de liaison (31) du corps d'enceinte (28) sont contiguës, et l'ouverture de liaison (31) dans la paroi latérale (30) et du corps d'enceinte (28) est susceptible d'être refermée par un couvercle (36) lorsqu'aucun élément d'extension (29) n'est accolé au corps d'enceinte (28).

13. Appareil selon la revendication 12,
caractérisé en ce qu'il est prévu dans la paroi latérale de l'élément d'extension (29) opposée à l'ouverture de liaison (32) une ouverture de liaison (35) correspondant à l'ouverture de liaison (32) en vue de la liaison avec un autre élément d'extension, cette ouverture étant susceptible d'être refermée par un couvercle (36).

14. Appareil selon l'une ou l'autre des revendications 12 et 13,
caractérisé en ce que des éléments de jonction (37, 38, 39, 40) mutuellement associés sont réalisés sur le corps d'enceinte (28) et sur l'élément d'extension (29) autour des ouvertures de liaison (31, 32, 35) ainsi que sur le couvercle (36), au moyen desquels les composants (28, 29, 36) peuvent être reliés les uns aux autres, de préférence avec interposition d'un élément d'étanchement.

15. Appareil selon la revendication 14,
caractérisé en ce que les éléments de jonction sont des brides de jonction (37, 38, 39, 40).

16. Appareil selon l'une des revendications 12 à 15,
caractérisé en ce que les liaisons entre le corps d'enceinte (28) et le couvercle (36), ou l'élément d'extension (29), ainsi qu'entre l'élément d'extension (29) et le couvercle (36) sont conçues sous forme de liaisons à haute pression.

17. Appareil selon l'une des revendications 12 à 16,
caractérisé en ce qu'il est prévu dans l'élément d'extension (29) une ouverture d'admission (4) susceptible d'être raccordée à au moins un dispositif de production d'oxygène (9) et débouchant en particulier côté plafond, et au moins une ouverture d'évacuation (5) qui garantit au moins une évacuation définie hors de la cavité intérieure de l'enceinte (1), ladite ouverture d'évacuation (5) étant agencée de préférence au-dessous de l'ouverture d'admission (4) et en particulier au sol ou au voisinage du sol de l'enceinte (1).

18. Appareil selon l'une des revendications 12 à 17,
caractérisé en ce que l'enceinte (1) est réalisée sous forme parallélépipédique.

19. Appareil selon l'une des revendications 12 à 18,
caractérisé en ce que l'enceinte (1) est réalisée sous forme cylindrique, et l'ouverture (3) pour l'introduction/extraction de la viande fraîche et les ouvertures de liaison (31, 32, 35) sont ménagées respectivement dans les faces frontales du corps d'enceinte (28) ou respectivement de l'élément d'extension (29).

20. Appareil selon l'une des revendications 12 à 19,
caractérisé en ce que pour la fermeture étanche à l'air et à la pression de la porte (3) de l'enceinte, il est prévu un joint pneumatique, qui présente de préférence la forme d'un tuyau posé autour de l'ouverture sur un tracé fermé, dont le diamètre est susceptible d'augmenter de manière élastique par admission d'un fluide avec une surpression supérieure à 1 bar, en particulier de 6 à 11 bars.

21. Appareil selon l'une des revendications 12 à 19,
caractérisé en ce que pour la fermeture étanche à l'air et à la pression de l'ouverture (3) à travers l'enceinte (1) il est prévu une fermeture à baïonnette.

22. Appareil selon l'une des revendications 12 à 21,
caractérisé en ce que l'admission d'oxygène a lieu par l'intermédiaire d'un dispositif de distribution d'oxygène agencé à l'intérieur de l'enceinte (1), constitué par des éléments de tubes (24) agencés en étoile, c'est-à-dire en projection radiale.

23. Appareil selon l'une des revendications 12 à 22,
caractérisé en ce que, pour l'évacuation du mélange gazeux correspondant à l'atmosphère environnante, l'enceinte (1) présente une ouverture d'évacuation (13), ménagée de préférence au niveau du plafond, ladite ouverture étant recouverte du côté intérieur à l'enceinte par un élément (18) écarté en forme de plaque.

24. Appareil selon l'une des revendications 12 à 23,
caractérisé en ce que pour le stockage d'oxygène, on prévoit un réservoir d'oxygène (11) agencé à l'extérieur de l'enceinte, ledit réservoir étant relié à la fois au dispositif de production d'oxygène (9) et à l'ouverture d'admission (4) au moyen d'une conduite de ramification (23) susceptible d'être refermée par une valve électromagnétique (22).

25. Appareil selon l'une des revendications 12 à 24,
caractérisé en ce qu'il est prévu une soupape de surpression (26) associée à l'ouverture ou à chaque ouverture d'évacuation (5), ladite soupape réagissant à une pression prédéterminée dans le local refermé de l'enceinte (1).
